# EUROPÄISCHE PATENTSCHRIFT

(11) **EP 3 118 028 B1**
(45) Veröffentlichungstag und Bekanntmachung des Hinweises auf die Patenterteilung: **17.01.2018**
(21) Anmeldenummer: 15176562.5
(22) Anmeldetag: 14.07.2015
(51) Int. Cl.: B60C 23/04, B60C 23/00

(54) **VERFAHREN ZUM ÜBERWACHEN VON REIFENZUSTÄNDEN UND/ODER SENSORZUSTÄNDEN, UND ÜBERWACHUNGSSYSTEM HIERFÜR**
METHOD FOR MONITORING OF TIRE CONDITIONS AND/OR SENSOR CONDITIONS, AND MONITORING SYSTEM THEREFOR
PROCEDE DE SURVEILLANCE D'ETATS DE PNEUS ET/OU D'ETATS DE CAPTEURS ET SYSTEME DE SURVEILLANCE CORRESPONDANT

(43) Veröffentlichungstag der Anmeldung: 18.01.2017
(73) Patentinhaber: Continental Reifen Deutschland GmbH, 30165 Hannover (DE)
(72) Erfinder: Cyllik, Adrian, 30159 Hannover (DE); Hanna, Jörg, 32289 Rödinghausen (DE); Enache, Florin, 300458 Timisoara (RO)
(74) Vertreter: Widjaja, Wira

(56) Entgegenhaltungen:
- US-A1- 2010 300 192

## Beschreibung

Die Erfindung betrifft ein Verfahren zum Überwachen von Reifenzuständen und/oder Sensorzuständen, insbesondere unter Verwendung von Reifen-Sensor-Modulen, sowie ein Überwachungssystem zum Überwachen von Reifenzuständen und/oder Sensorzuständen.

Zur Überwachung von Reifenzuständen, insbesondere einem Reifendruck, von Reifen eines Nutzfahrzeuges sind Reifen-Sensor-Module bzw. Transponder bekannt, die beispielsweise im Inneren eines Reifens angeordnet sind. Derartige Reifen-Sensor-Module sind ausgebildet, positionsgebunden einen Reifendruck, mechanische Spannungszustände im Reifen sowie eine Reifentemperatur zu erfassen, zu verarbeiten und per hochfrequentem (HF) Funksignal über ein Datentelegramm an ein elektronisches Steuergerät (ECU) eines Überwachungssystems zu übertragen. Das Steuergerät nimmt das Datentelegramm über ein Empfangsmodul des Überwachungssystems auf und gibt in Abhängigkeit von Grenzwerten ein Warnsignal an den Fahrer aus, beispielsweise wenn an einem der Reifen ein Reifendruck unterhalb eines Grenzwertes festgestellt wurde. Ein Beispiel für ein solches Reifen-Sensor-Modul offenbart die DE 102 43 441 A1. Weiterhin kann von einem Reifen-Sensor-Modul über das Datentelegramm ein Sensorzustand an das Steuergerät übertragen werden, beispielsweise ein Sensor-Defekt oder das Vorhandensein eines losen Reifen-Sensor-Moduls, und an den Fahrer über das Warnsignal ausgegeben werden.
Die US 2010/300192 A1 offenbart ein bekanntes Verfahren zur Erfassung Reifensensoren mit einem fahrzeugseitigen Empfangsmodul.

Werden die Reifen eines zweiteiligen Nutzfahrzeuges aus einem Zugfahrzeug und einem Anhängerfahrzeug, d.h. Auflieger oder Anhänger überwacht, so werden die Reifen-Sensor-Module des Zugfahrzeuges über eine Sensor-Kennung bzw. eine Sensor-Identifikation bereits vorab im Steuergerät eingespeichert, wobei das jeweilige Reifen-Sensor-Modul einem Reifen des Zugfahrzeuges eindeutig zugeordnet wird. Ist ein Anhängerfahrzeug für einen längeren Zeitraum mit dem Zugfahrzeug verbunden, können die Reifen-Sensor-Module dieses Anhängerfahrzeuges ebenfalls im Steuergerät gespeichert und den einzelnen Reifen eindeutig zugeordnet werden. Wird das Anhängerfahrzeug jedoch häufig gewechselt, werden die Reifen-Sensor-Module des Anhängerfahrzeuges vom Überwachungssystem durch eine automatische Anhänger-Erkennung eingebunden. Dadurch ist bei einem Wechsel des Anhängerfahrzeuges kein manuelles Einspeichern nötig, allerdings können die jeweiligen Reifen-Sensor-Module den Reifen des Anhängerfahrzeuges nicht positionsgebunden einem bestimmten Reifen zugeordnet werden.

Zur automatischen Anhänger-Erkennung wird von dem Überwachungssystem bei fahrendem Nutzfahrzeug ein Überwachungsbereich auf Datentelegramme von beliebigen Reifen-Sensor-Modulen überwacht, die dem Steuergerät noch nicht bekannt sind. Wird ein neues bzw. unbekanntes Reifen-Sensor-Modul erfasst, wird über einen längeren Zeitraum von beispielsweise bis zu dreißig Minuten festgestellt und plausibilisiert, ob das unbekannte Reifen-Sensor-Modul zum eigenen Anhängerfahrzeug gehört oder nicht. Dies erfolgt beispielsweise durch eine Prüfung, ob sich das Reifen-Sensor-Modul über diesen Zeitraum mit dem Zugfahrzeug mitbewegt oder nicht, indem überwacht wird, ob von diesem unbekannten Reifen-Sensor-Modul über diesen Zeitraum eine bestimmte Anzahl an Datentelegrammen übermittelt werden. Ist die Anhänger-Erkennung abgeschlossen, d.h. es wird eine Zugehörigkeit des Reifen-Sensor-Moduls oder auch mehrerer Reifen-Sensor-Module zum eigenen Anhängerfahrzeug festgestellt, ist das Überwachungssystem bereit, die entsprechenden Datentelegramme des Reifen-Sensor-Moduls auch zu verarbeiten bzw. auszuwerten und beispielsweise Warnsignale in Abhängigkeit der erfassten Reifenzustände auszugeben.

Nachteilig dabei ist, dass das Einbinden aller im Überwachungsbereich erkannten und dem eigenen Anhängerfahrzeug zugeordneten Reifen-Sensor-Module sehr lange dauert und der Fahrer des Nutzfahrzeuges somit bis zur Fertigstellung der Anhänger-Erkennung keine Rückmeldung über den Zustand der Reifen seines Anhängers oder über den Zustand des Reifen-Sensor-Moduls, beispielsweise bei einem defekten Sensor, bekommt. Zudem muss sich das Fahrzeug in Bewegung befinden. Dadurch kann der Fall eintreten, dass bei einem Wechsel des Anhängerfahrzeuges die Fahrt mit einem defekten Reifen oder einem defekten Sensor fortgesetzt wird, wodurch sich fahrkritische Situationen ergeben können.

Der Erfindung liegt daher die Aufgabe zugrunde, ein Verfahren zur Überwachung von Reifenzuständen und/oder von Sensorzuständen bereitzustellen, mit dem mit geringem Zeitaufwand der Zustand von Reifen insbesondere eines eigenen Anhängerfahrzeuges und/oder der Zustand von Sensoren zum Messen der Reifenzustände von Reifen insbesondere des eigenen Anhängerfahrzeuges überwacht werden können, um fahrkritische Situationen vermeiden zu können. Weiterhin ist Aufgabe der Erfindung ein entsprechendes Überwachungssystem zur Durchführung des Verfahrens bereitzustellen.

Gelöst wird die Aufgabe durch ein Verfahren nach Anspruch 1 sowie eine Vorrichtung nach Anspruch 11. Die Unteransprüche geben bevorzugte Weiterbildungen an.

Erfindungsgemäß ist demnach vorgesehen, alle in einem Überwachungsbereich eines eigenen Nutzfahrzeuges mit angekoppeltem Anhängerfahrzeug erfassten Reifen-Sensor-Module zu überwachen. Dies bedeutet beispielsweise, dass von allen in dem Überwachungsbereich erfassten Reifen-Sensor-Modulen übertragene Datentelegramme bereits ausgewertet werden bevor eine Feststellung, ob die erfassten Reifen-Sensor-Module dem eigenen Anhängerfahrzeug zugeordnet sind, abgeschlossen ist.

Dadurch wird erfindungsgemäß erkannt, dass eine sofortige Auswertung nach dem Erfassen eines Reifen-Sensor-Moduls wichtiger ist als zunächst festzustellen, ob ein erfasstes Reifen-Sensor-Modul zum eigenen Anhängerfahrzeug gehört. Vorteilhafterweise wird das Verfahren angewandt, um direkt nach einem Ankoppeln eines neuen Anhängerfahrzeuges oder bei Fahrtbeginn Reifenzustände der Reifen dieses Anhängerfahrzeuges bzw. Sensorzustände der Reifen-Sensor-Module an den Reifen des neuen Anhängerfahrzeugs auch überwachen zu können, wobei die Auswertung beispielsweise startet, sobald die Zündung des Fahrzeuges betätigt wird, d.h. bereits bevor sich das Fahrzeug in Bewegung setzt.

Bei dem Erfassen wird dabei zunächst ermittelt, ob ein Datentelegramm von einem unbekannten Reifen-Sensor-Modul empfangen wird. Unbekannt heißt, dass das im Überwachungsbereich befindliche Reifen-Sensor-Modul beispielsweise nicht dem eigenen Zugfahrzeug zugeordnet ist, wobei dazu beispielsweise eine vom Reifen-Sensor-Modul über das Datentelegramm übertragene Sensor-Kennung bzw. Sensor-Identifikation abgeglichen werden kann.

Das erfindungsgemäße Überwachen bzw. Auswerten beinhaltet weitergehend, dass das von dem erfassten und noch unbekannten Reifen-Sensor-Modul empfangene, die Reifenzustände und/oder den Sensorzustand charakterisierende Datentelegramm beispielsweise mit einem Grenzwert verglichen bzw. auf kritische Sensorzustände überwacht wird.

Als Reifenzustände werden insbesondere eine Reifentemperatur, mechanische Spannungszustände, eine Profiltiefe, eine Radlast oder ein Reifendruck verstanden, die von dem Reifen-Sensor-Modul, das vorzugsweise im Inneren des Reifens angeordnet ist, gemessen, verarbeitet und über das Datentelegramm drahtlos, vorzugsweise über ein hochfrequentes (HF) Funksignal, an das Steuergerät (ECU) eines Überwachungssystem übermittelt wird. Ein Reifen-Sensor-Modul übermittelt hierbei beispielsweise alle ca. 16 Sekunden ein Datentelegramm mit insbesondere den Reifenzuständen des entsprechenden Reifens sowie dem Sensorzustand. Das Steuergerät vergleicht diese Reifenzustände und gibt beispielsweise bei einem Überschreiten der Reifentemperatur über eine Solltemperatur bzw. bei einem Unterschreiten des Reifendruckes unter einen Solldruck ein Warnsignal an den Fahrer aus, so dass dieser darauf entsprechend reagieren kann. Das Erfassen und Vergleichen kann hierbei von einer entsprechenden Software auf dem Steuergerät durchgeführt werden.

Als kritischer Sensorzustand wird insbesondere ein Defekt des Reifen-Sensor-Moduls oder ein loses Reifen-Sensor-Modul verstanden. Wird vom Reifen-Sensor-Modul ein kritischer Sensorzustand erkannt, wird dieser über das Datentelegramm ausgegeben. Das Steuergerät überwacht das Datentelegramm im Hinblick auf einen kritischen Sensorzustand und gibt in dem Fall ein entsprechendes Warnsignal an den Fahrer aus. Ergänzend kann das Steuergerät die Datentelegramme auch bezüglich eines schlechten Empfangs überwachen, indem beispielsweise temporär ausbleibende Datentelegramme mit einer bestimmten Sensor-Identifikation überwacht werden.

Somit wird der Vorteil erreicht, dass sofort nachdem ein Reifen-Sensor-Modul erfasst wurde, fahrkritische Reifenzustände bzw. Reifenzustände, die zu einer Schädigung des Reifens führen können, wie beispielsweise eine erhöhte Reifentemperatur oder ein zu niedriger Reifendruck sowie kritische Sensorzustände erkannt werden können. Der Fahrer kann dann kontrollieren, ob ein Reifen bzw. ein Reifen-Sensor-Modul des eigenen Anhängerfahrzeuges betroffen ist oder ein benachbartes Nutzfahrzeug, d.h. ein benachbartes Zugfahrzeug und/oder Anhängerfahrzeug, im Überwachungsbereich beispielsweise einen defekten Reifen oder einen defekten Reifen-Sensor-Modul aufweist. Die Sicherheit steigt, da bei einem Warnsignal sofort reagiert werden kann und die Gefahr minimiert wird, dass der Fahrer nach einem Wechsel des Anhängerfahrzeuges seine Fahrt mit einem defekten Reifen oder einem defekten Reifen-Sensor-Modul am Anhänger fortsetzt bzw. überhaupt beginnt. Vorteilhafterweise muss der Fahrer somit nach dem Wechsel des Anhängers oder bei Wiederaufnahme der Fahrt nicht warten bis die Feststellung, ob es sich um ein Reifen-Sensor-Modul des eigenen Anhängers handelt, abgeschlossen ist.

Die Feststellung, ob das erfasste und unbekannte Reifen-Sensor-Modul dem eigenen Anhängerfahrzeug zugeordnet ist, findet dabei gemäß einer vorteilhaften Weiterbildung zusätzlich im Hintergrund statt, während sich das eigene Nutzfahrzeug bewegt. Dazu wird vorzugsweise überwacht und plausibilisiert, ob von ein und demselben bisher unbekannten Reifen-Sensor-Modul über einen festgelegten Zeitraum von beispielsweise acht bis zehn Minuten eine bestimmte Anzahl an Datentelegrammen, beispielsweise 30 Datentelegramme, empfangen werden, wobei lediglich Reifen-Sensor-Module berücksichtigt werden, die sich ebenfalls bewegen. Dazu kann beispielsweise die auf dem Reifen-Sensor-Modul gespeicherte und drahtlos übertragene Sensor-Identifikation über den Zeitraum überwacht werden. Wird ein Reifen-Sensor-Modul dem eigenen Anhängerfahrzeug zugeordnet, wird dieses Reifen-Sensor-Modul im Steuergerät beispielsweise als bekannt zwischengespeichert und solange überwacht, bis die Anhängererkennung erneut gestartet wird. Diese Feststellung wird parallel für alle erfassten und unbekannten Reifen-Sensor-Module durchgeführt. Ist die Zuordnung aller Reifen-Sensor-Module für das eigene Anhängerfahrzeuges abgeschlossen, kann die Anhänger-Erkennung abgeschaltet werden, um die Warnsignale auf das eigene Nutzfahrzeug zu beschränken. Ab dem Zeitpunkt werden vorteilhafterweise lediglich bekannte Reifen-Sensor-Module ausgewertet.

Vorteilhafterweise wird der Grenzwert für die Reifentemperatur, den mechanischen Spannungszustand, die Profiltiefe, die Radlast sowie den Reifendruck für das erfindungsgemäße Auswerten derartig gewählt, dass kritische Fahrsituationen vermieden werden können, wobei bei einer kritischen Fahrsituation beispielsweise ein Reifen zu brennen beginnen kann oder der Reifen von der Felge rutschen kann. Darunter wird aber auch verstanden, dass eine Schädigung des Reifens über die Zeit beispielsweise aufgrund einer signifikant erhöhten Temperatur oder eines signifikant zu niedrigen Druckes auftreten kann. Dazu kann beispielsweise ein Grenzwert von kleiner oder gleich in etwa 80% eines Solldruckes oder größer oder gleich in etwa 120% einer Solltemperatur gewählt werden. Diese Grenzwerte werden lediglich in kritischen Ausnahmefällen erreicht, wenn beispielsweise ein Reifen von einem Fremdkörper durchstoßen wurde oder wenn ein Reifen blockiert. Entsprechendes gilt für die Grenzwerte für die Profiltiefe, die Radlast und den mechanischen Spannungszustand. Vorteilhafterweise können auch die Warnsignale bei kritischen Sensorzuständen des Reifen-Sensor-Moduls auf bestimmte Sensorzustände, beispielsweise lediglich auf einen Sensor-Defekt beschränkt werden.

Dadurch ergibt sich der Vorteil, dass die Anzahl der Warnsignale verringert werden kann, da bei einer zu geringeren Abweichung vom entsprechenden Sollwert und bei einer Anhäufung von Nutzfahrzeugen, beispielsweise auf einem Parkplatz, die Anzahl der Warnsignale sehr hoch ist, da geringe Schwankungen beispielsweise des Reifendruckes möglich sind, ohne dass es dabei zu einer fahrkritischen Situation kommt. Weiterhin kann es vorkommen, dass bei benachbarten Fahrzeugen andere Sollwerte vorgegeben sind, da sie andere Reifentypen haben oder anders beladen sind. Somit wird erkannt, dass für die Wahl des Grenzwertes eine höhere Abweichung vom entsprechenden Sollwert sinnvoller ist, um nicht zu viele Warnsignale zu erhalten, dabei aber zumindest ein kritisches Fahrverhalten verhindert werden kann.

Die o.g. Grenzwerte für eine kritische Fahrsituation gelten hierbei vorteilhafterweise lediglich solange die automatische Anhänger-Erkennung noch nicht abgeschlossen ist. Ist die Anhänger-Erkennung abgeschlossen, können die Grenzwerte derartig eingestellt werden, dass auch Warnmeldungen ausgegeben werden, wenn eine Abweichung vom Grenzwert bzw. ein bestimmter Sensorzustand nicht zu einer kritischen Fahrsituation führt.

Gemäß einer vorteilhaften Weiterbildung ist vorgesehen, dass das Reifen-Sensor-Modul einen Bewegungszustand erfasst und über das Datentelegramm ausgibt. Die Reifen-Sensor-Module sind hierbei ausgebildet, aus einer Messung der Beschleunigung, vorzugsweise der Radialbeschleunigung und/oder der Tangentialbeschleunigung und/oder der Lateralbeschleunigung zu erkennen, ob sich das Reifen-Sensor-Modul und somit auch der entsprechende Reifen bewegt. Diese Information kann über das Datentelegramm ebenfalls an das Steuergerät drahtlos übertragen werden.

Dadurch kann der Vorteil erreicht werden, dass die erfindungsgemäße Auswertung im Steuergerät in Abhängigkeit des Bewegungszustandes stattfinden kann. Als Bewegungszustände kommen hierbei beispielsweise ein Stillstand bzw. eine langsame Fahrt mit beispielsweise einer Geschwindigkeit des Reifen-Sensor-Moduls, die einer Fahrzeuggeschwindigkeit von weniger als 20 km/h entspricht, oder ein Fahrzustand beispielsweise mit einer Fahrzeuggeschwindigkeit von 20 km/h oder mehr in Frage.

Demnach kann vorteilhafterweise vorgesehen sein, lediglich dann die durch das Datentelegramm ausgegebenen Reifenzustände mit dem Grenzwert zu vergleichen oder einen kritischen Sensorzustand zu überwachen, wenn das eigene Zugfahrzeug denselben Bewegungszustand aufweist wie das Reifen-Sensor-Modul, dessen Reifenzustände bzw. Sensorzustände bewertet werden sollen. Befindet sich also das eigene Zugfahrzeug im Stillstand bzw. in langsamer Fahrt, werden lediglich Reifenzustände bzw. Sensorzustände von Reifen-Sensor-Modulen bewertet, die sich ebenfalls langsam bewegen oder stillstehen. Ergänzend oder alternativ kann vorgesehen sein, dass bei einem Fahrtzustand, d.h. bei einer Bewegung des eigenen Nutzfahrzeuges mit mehr als 20 km/h lediglich Reifenzustände bzw. Sensorzustände von Reifen-Sensor-Modulen bewertet werden, die sich ebenfalls mit einer Geschwindigkeit bewegen, die einer Fahrzeuggeschwindigkeit von beispielsweise 20km/h oder mehr entspricht.

Dadurch steigt in beiden Fällen die Wahrscheinlichkeit, dass das ausgegebene Warnsignal vom eigenen Anhängerfahrzeug stammt, da sich dieses ebenfalls nicht bzw. nur langsam oder schneller bewegt. Die Anzahl der Warnsignale kann dadurch vorteilhafterweise weiter reduziert werden.

Anhand eines Ausführungsbeispiels soll die Erfindung näher erläutert werden. Es zeigen:
- Fig. 1:: ein Nutzfahrzeug mit einem Zugfahrzeug und einem Anhängerfahrzeug und einem benachbarten Nutzfahrzeug; und
- Fig. 2:: ein Flussdiagramm zur erfindungsgemäßen Überwachung eines Reifenzustandes.

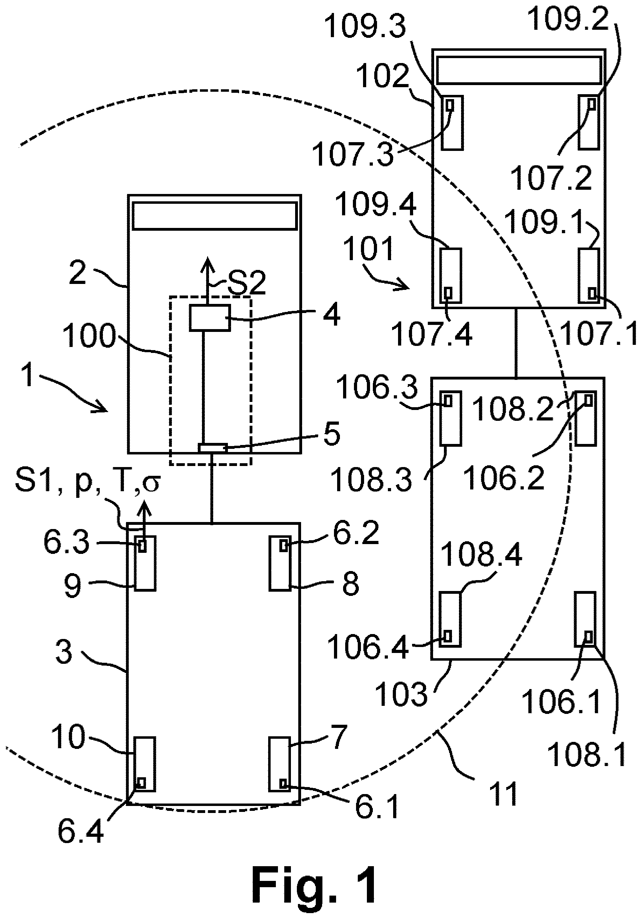

Die Fig. 1 zeigt ein Nutzfahrzeug 1 mit einem Zugfahrzeug 2 und einem Anhängerfahrzeug 3. An dem Zugfahrzeug 2 ist ein Steuergerät 4 (ECU) vorgesehen, das mit einem Empfangsmodul 5 verbunden ist. Im Steuergerät 4 kann ebenfalls ein nicht dargestelltes Empfangsmodul enthalten sein. Das Empfangsmodul 5 ist hierbei vorzugsweise an einem hinteren Ende des Zugfahrzeuges 2 angeordnet. Das Empfangsmodul 5 ist ausgebildet, ein Datentelegramm S1 von Reifen-Sensor-Modulen 6.i, mit i=1 bis 4 zu empfangen. Gemäß Fig. 1 sind die Reifen-Sensor-Module 6.i beispielhaft lediglich an den Reifen 7, 8, 9, 10 des Anhängerfahrzeuges 3 angeordnet und geben jeweils drahtlos, beispielsweise über ein hochfrequentes Funksignal, ein Datentelegramm S1 aus. Weitere, nicht dargestellte Reifen-Sensor-Module sind an den Reifen des Zugfahrzeuges 2 angeordnet, deren Funksignale insbesondere vom Empfangsmodul 5 sowie ggf. von dem weiteren Empfangsmodul im Steuergerät 4 aufgenommen werden können. Das Steuergerät 4 verarbeitet die vom Empfangsmodul 5 aufgenommen Signale weiter. Das Steuergerät 4 und das Empfangsmodul 5 sowie ggf. das weitere Empfangsmodul im Steuergerät 4 bilden hierbei ein Überwachungssystem 100 zur Überwachung von Reifenzuständen p, T, σ und kritischen Sensorzuständen unter Verwendung der Reifen-Sensor-Module 6.i und ggf. weiterer Reifen-Sensor-Module 106.i, 107.i.

Die Reifen-Sensor-Module 6.i sind hierbei jeweils am Reifen 7, 8, 9, 10 angeordnet und können Reifenzustände, wie beispielsweise einen Reifendruck p, eine Reifentemperatur T sowie mechanische Spannungen σ erfassen, die erfassten Reifenzustände p, T, σ verarbeiten und über das Datentelegramm S1 drahtlos ausgeben. Weiterhin können über das Datentelegramm S1 eine Sensor-Identifikation bzw. eine Sensor-Kennung, ein kritischer Sensorzustand, beispielsweise ein Sensor-Defekt oder ein loses Reifen-Sensor-Modul 6.i sowie ein Bewegungszustand des jeweiligen Reifens 7, 8, 9, 10 ausgegeben werden.

Befindet sich ein derartiges Reifen-Sensor-Modul 6.i in einem Überwachungsbereich 11 des Empfangsmoduls 5 oder des Steuergerätes 4, kann das Reifen-Sensor-Modul 6.i vom Steuergerät 4 zunächst erfasst und daraufhin überprüft werden, ob dieses Reifen-Sensor-Modul 6.i an einem der Reifen des eigenen Zugfahrzeuges 2 angeordnet ist, d.h. bereits bekannt ist. Dies kann beispielsweise anhand der Sensor-Identifikation erfolgen.

Ist das erfasste Reifen-Sensor-Modul 6.i unbekannt, wird das Datentelegramm S1 ausgewertet, indem die über das Datentelegramm S1 übermittelten Reifenzustände p, T, σ mit Grenzwerten GW verglichen werden, wobei die Grenzwerte GW prozentuale Abweichungen von einem Sollwert, z.B. einer Solltemperatur TSoll oder einem Solldruck pSoll oder einer Sollspannung σSoll angeben. Sind die Grenzwerte GW unter- bzw. überschritten, d.h. liegt beispielsweise ein zu niedriger Reifendruck p oder eine zu hohe Reifentemperatur T vor, wird vom Steuergerät 4 ein Warnsignal S2 an den Fahrer ausgegeben. Werden mehrere unbekannte Reifen-Sensor-Module 6.i erfasst, findet die Auswertung der Datentelegramme S1 aller Reifen-Sensor-Module 6.i parallel statt.

Weiterhin werden von der Steuereinrichtung 4 die über das Datentelegramm S1 übermittelten Sensorzustände überwacht und bei einem Erkennen eines kritischen Sensorzustandes ein Warnsignal S2 an den Fahrer ausgegeben.

Der Überwachungsbereich 11 kann beispielsweise 20-25m betragen. Dadurch können auch unbekannte Reifen-Sensor-Module 106.i, 107.i an Reifen 108.i und 109.i eines benachbarten Nutzfahrzeuges 101 mit einem Zugfahrzeug 102 und einem Anhängerfahrzeug 103 erfasst werden, das sich gemäß Fig. 1 zumindest teilweise im Überwachungsbereich 11 befindet. Damit bei der Auswertung der Datentelegramme S1 aller erfassten und unbekannten Reifen-Sensor-Module 6.i, 106.i, 107.i nicht zu viele Warnsignale S2 an den Fahrer ausgegeben werden, werden die Grenzwerte GW derartig festgelegt, dass der Fahrer lediglich bei fahrkritischen Reifenzuständen einen Hinweis erhält. So kann beispielsweise der Grenzwert GW für den Reifendruck p auf einen Wert von kleiner oder gleich 80% des Solldrucks pSoll, beispielsweise auf 20% Minderdruck, d.h. 80% des Solldrucks pSoll bzw. GW = 0.8 x pSoll, festgelegt werden, wodurch lediglich geringe Schwankungen beim Reifendruck p, die zu keiner fahrkritischen Situation führen, kein Warnsignal S2 auslösen. Weiterhin können auch die Sensorzustände, bei denen ein Warnsignal S2 ausgelöst wird, beschränkt werden.

Da während der Auswertung unmittelbar nach der Erfassung zunächst unklar ist, ob das unbekannte Reifen-Sensor-Modul 6.i, 106.i, 107.i an einem Reifen 7, 8, 9, 10 des eigenen Anhängerfahrzeuges 3 angeordnet ist, muss der Fahrer bei einem Warnsignal S2 selbst überprüfen, ob dieses von einem Reifen-Sensor-Modul 6.i des eigenen Anhängerfahrzeuges 3 oder des benachbarten Nutzfahrzeuges 101 stammt, indem er die Reifen 7, 8, 9, 10 bzw. 108.i und 109.i überprüft.

Zusätzlich wird in dem Steuergerät 4 eine automatische Anhänger-Erkennung durchgeführt, die über einen Zeitraum dT feststellt bzw. plausibilisiert, ob die empfangenen Datentelegramme S1 von den Reifen-Sensor-Modulen 6.i des eigenen Anhängerfahrzeuges 3 ausgegeben werden. Wurde eine entsprechende Anzahl an Reifen-Sensor-Modulen 6.i für das eigene Anhängerfahrzeug 3 erkannt, kann die Anhänger-Erkennung abgeschaltet werden, um unnötige Warnsignale S2 zu vermeiden.

Gemäß einer Weiterbildung des Verfahrens ist vorgesehen, dass der von den Reifen-Sensor-Modulen 6.i, 106.i, 107.i ausgegebene Bewegungszustand bei der Auswertung berücksichtigt wird. Die Reifen-Sensor-Module 6.i, 106.i, 107.i bestimmen dabei beispielsweise aus einer vorherrschenden Radialbeschleunigung, ob sich der entsprechende Reifen bewegt oder steht, d.h. ob sich das Fahrzeug mit diesem Reifen in einem Fahrzustand oder im Stillstand bzw. in langsamer Fahrt befindet.

Um keine unnötigen Warnsignale S2 zu erzeugen, kann demnach berücksichtigt werden, ob die Datentelegramme S1 bzw. die Reifenzustände p, T, σ oder Sensorzustände von Reifen-Sensor-Modulen 6.i, 106.i, 107.i ausgegeben werden, die denselben Bewegungszustand aufweisen wie das eigene Zugfahrzeug 2. Somit können bei einem parkenden, im Stillstand oder in langsamer Fahrt befindlichen Zugfahrzeug 2 alle Reifen-Sensor-Module 6.i, 106.i, 107.i von der Auswertung ausgeschlossen werden, die sich mit einer Geschwindigkeit bewegen, die einer Fahrzeuggeschwindigkeit von beispielsweise 20km/h oder mehr entspricht. Ergänzend oder alternativ können bei einem sich mit mehr als 20/km/h bewegenden Zugfahrzeug 2 alle Reifen-Sensor-Module 6.i, 106.i, 107.i, die sich nicht oder nur langsam bewegen bei der Auswertung ausgeschlossen werden.

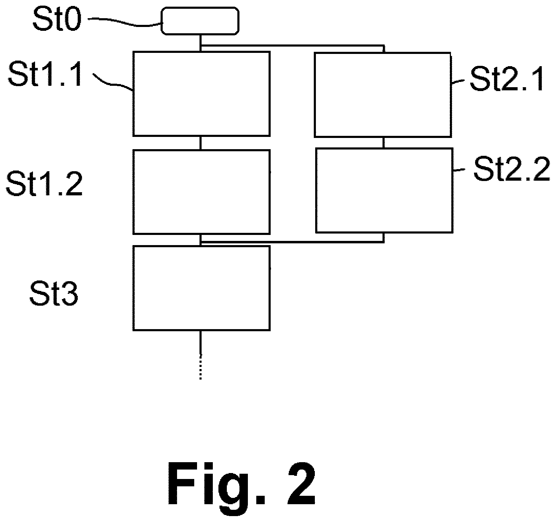

Das erfindungsgemäße Verfahren kann gemäß Fig. 2 wie folgt durchgeführt werden:

In einem Schritt St0 beginnt das Verfahren beispielsweise mit dem Starten des Nutzfahrzeuges 1 oder nachdem das Nutzfahrzeug 1 eine bestimmte Zeit von beispielsweise 15 Minuten nicht gefahren ist. Nach dem Schritt St0 verzweigt sich das Verfahren, wobei in einem ersten Zweig die automatische Anhänger-Erkennung durchgeführt wird, d.h. die Feststellung, ob ein unbekanntes Reifen-Sensor-Modul 6.i, 106.i, 107.i dem eigenen Anhängerfahrzeug 3 zugeordnet ist oder nicht, und in einem parallel dazu verlaufenden zweiten Zweig das erfindungsgemäße Überwachen der Reifenzustände p, T, σ bzw. der Sensorzustände stattfindet.

Im ersten Zweig wird in einem ersten Schritt St1.1 erfasst, ob sich das eigene Nutzfahrzeug 1 bewegt. Ist dies nicht der Fall, werden die von dem mindestens einen im Überwachungsbereich 11 befindlichen unbekannten Reifen-Sensor-Modul 6.i, 106.i, 107.i empfangen Datentelegramme S1 verworfen, da die automatische Anhänger-Erkennung lediglich bei einem sich bewegenden Nutzfahrzeug 1 durchgeführt wird. Dementsprechend werden auch keine Warnsignale S2 ausgegeben.

Wird eine Bewegung des eigenen Nutzfahrzeuges 1 erfasst, werden in einem zweiten Schritt St1.2 dieses Zweiges die über das Datentelegramm S1 übertragene Sensor-Identifikation des unbekannten bzw. aller unbekannten Reifen-Sensor-Module 6.i, 106.i, 107.i über einen Zeitraum dT gesammelt und gezählt, wobei hierzu nur sich bewegende Reifen-Sensor-Module 6.i, 106.i, 107.i berücksichtigt werden. Währenddessen werden keine Warnsignale S2 ausgegeben.

In dem zweiten Zweig werden parallel dazu in einem ersten Schritt St2.1 bereits bei stehendem Nutzfahrzeug 1 die Datentelegramme S1 der unbekannten Reifen-Sensor-Module 6.i, 106.i, 107.i ausgewertet. Dazu werden die über das Datentelegramm S1 übertragenen Reifenzustände p, T, σ jeweils mit einem Grenzwert GW verglichen bzw. die Sensorzustände auf kritische Sensorzustände überwacht. Bei entsprechender Überschreitung bzw. Unterschreitung des Grenzwertes GW oder bei Vorliegen eines kritischen Sensorzustandes werden Warnsignale S2 ausgegeben. Gemäß diesem Ausführungsbeispiel werden hierbei lediglich Reifen-Sensor-Module 6.i, 106.i, 107.i ausgewertet, die ebenfalls nicht in Bewegung sind.

Ergänzend werden in einem Schritt St2.2 auch bei fahrendem Nutzfahrzeug 1 die Datentelegramme S1 der unbekannten Reifen-Sensor-Module 6.i, 106.i, 107.i ausgewertet, indem die übertragenen Reifenzustände p, T, σ jeweils mit dem Grenzwert GW verglichen werden oder der Sensorzustand überwacht wird. Bei entsprechender Überschreitung bzw. Unterschreitung des Grenzwertes GW werden Warnsignale S2 ausgegeben. Ebenso werden Warnsignale S2 ausgegeben, wenn der Sensorzustand beispielsweise auf einen Defekt hinweist. Gemäß diesem Ausführungsbeispiel werden hierbei lediglich Reifen-Sensor-Module 6.i, 106.i, 107.i ausgewertet, die ebenfalls in Bewegung sind.

Nach den Schritten St1.2 und St2.2 laufen die Zweige wieder zusammen. Nach diesen Schritten ist die automatische Anhänger-Erkennung abgeschlossen. Demnach ist im Schritt St3, nachdem die Reifen-Sensor-Module 6.i dem eigenen Anhängerfahrzeug 3 zugeordnet wurden, die automatische Anhänger-Erkennung beendet und die nun bekannten Reifen-Sensor-Module 6.i werden dauerhaft überwacht beispielsweise bis die automatische Anhänger-Erkennung neu gestartet wird.

Alternativ kann vorgesehen sein, dass die Datentelegramme S1 im Schritt St2.1 noch nicht verwertet werden. D.h. im erfindungsgemäßen Verfahren zur Überwachung von Reifenzuständen und Sensorzuständen werden erst im Fahrtzustand Warnsignale S2 ausgegeben, wenn der Grenzwert überschritten oder unterschritten ist und/oder ein kritischer Sensorzustand festgestellt wurde, wobei gemäß diesem Ausführungsbeispiel lediglich Reifen-Sensor-Module 6.i, 106.i, 107.i berücksichtigt werden, die ebenfalls in Bewegung sind.

### Bezugszeichenliste

- 1: eigenes Nutzfahrzeug
- 2: Zugfahrzeug
- 3: Anhängerfahrzeug
- 4: Steuergerät
- 5: Empfangsmodul
- 6.i: Reifen-Sensor-Module
- 7, 8, 9, 10: Reifen des Anhängerfahrzeuges 3
- 11: Überwachungsbereich
- 100: Überwachungssystem
- 101: benachbartes Nutzfahrzeug
- 102: Zugfahrzeug von 101
- 103: Anhängerfahrzeug von 101
- 106.i: Reifen-Sensor-Module an 103
- 107.i: Reifen-Sensor-Module an 102
- 108.i: Reifen des benachbarten Anhängerfahrzeuges 103
- 109.i: Reifen des benachbarten Zugfahrzeuges 102

- dT: Zeitraum
- GW: Grenzwerte
- p: Reifendruck
- pSoll: Solldruck
- T: Reifentemperatur
- TSoll: Solltemperatur
- σ: mechanischer Spannungszustand
- σSoll: Sollspannung
- S1: Datentelegramm
- S2: Warnsignale

- St0, St1.1, St1.2, St2.1, St2.2, St3: Verfahrensschritte

## Patentansprüche

1. Verfahren zum Überwachen von Reifenzuständen (p, T, σ) und/oder Sensorzuständen, mit mindestens den folgenden Schritten,
a) Erfassen, ob mindestens ein Reifen-Sensor-Modul (6.i, 106.i, 107.i) zum Messen von Reifenzuständen (p, T, σ) und/oder Sensorzuständen in einem Überwachungsbereich (11) vorhanden ist;
b) Ermitteln, ob das mindestens eine erfasste Reifen-Sensor-Modul (6.i, 106.i, 107.i) unbekannt ist;
c) Auswerten von Datentelegrammen (S1) des mindestens einen erfassten und unbekannten Reifen-Sensor-Moduls (6.i, 106.i, 107.i),
**dadurch gekennzeichnet, dass,**
bei einem Schritt c) ein Auswerten von Datentelegrammen (S1) des mindestens einen erfassten und unbekannten Reifen-Sensor-Moduls (6.i, 106.i, 107.i) erfolgt, wobei das Auswerten zumindest einen Vergleich mindestens eines durch das Datentelegramm (S1) übertragenen Reifenzustandes (p, T, σ) mit einem Grenzwert (GW) dafür und/oder ein Überwachen eines durch das Datentelegramm (S1) übertragenen Sensorzustandes des Reifen-Sensor-Moduls (6.i, 106.i, 107.i) umfasst (St2.1, St2.2),
wobei bei einem Schritt d) ein Ausgeben eines Warnsignals (S2) erfolgt,
wenn ein Reifenzustand (p, T, σ) den jeweiligen Grenzwert (GW) überschreitet bzw. unterschreitet, zum Anzeigen, dass ein Reifenzustand (p, T, σ) eines dem mindestens einen unbekannten Reifen-Sensor-Modul (6.i, 106.i, 107.i) zugeordneten Reifens (7, 8, 9, 10, 108.i, 109.i) kritisch ist und/oder wenn ein kritischer Sensorzustand erkannt wird (St2.1, St2.2)

2. Verfahren nach Anspruch 1, **dadurch gekennzeichnet, dass** von dem Reifen-Sensor-Modul (6.i, 106.i, 107.i) als Reifenzustand eine Reifentemperatur (T) und/oder ein Reifendruck (p) und/oder ein mechanischer Spannungszustand (σ) und/oder eine Profiltiefe und/oder eine Radlast gemessen bzw. ermittelt und über das Datentelegramm (S1) ausgegeben wird.

3. Verfahren nach Anspruch 2, **dadurch gekennzeichnet, dass** der Grenzwert (GW) für den Reifendruck (p) kleiner oder gleich 80% eines Solldrucks (pSoll) entspricht zum Ausgeben eines Warnsignals (S2) wenn der Reifendruck (p) des entsprechenden Reifens (7, 8, 9, 10, 108.i, 109.i) den Solldruckwert (pSoll) um mehr als 20% unterschreitet.

4. Verfahren nach Anspruch 2 oder 3, **dadurch gekennzeichnet, dass** der Grenzwert für die Reifentemperatur (T) größer oder gleich 120% einer Solltemperatur (TSoll) entspricht zum Ausgeben eines Warnsignals (S2) bei einer Temperaturüberschreitung des entsprechenden Reifens (7, 8, 9, 10, 108.i, 109.i) von mehr als 20%.

5. Verfahren nach einem der vorhergehenden Ansprüche, **dadurch gekennzeichnet, dass** von dem Reifen-Sensor-Modul (6.i, 106.i, 107.i) als kritischer Sensorzustand ein Sensor-Defekt und/oder ein loser Sensor erkannt und über das Datentelegramm (S1) ausgegeben wird.

6. Verfahren nach einem der vorherigen Ansprüche, **dadurch gekennzeichnet, dass** von dem Reifen-Sensor-Modul (6.i, 106.i, 107.i) über das Datentelegramm (S1) eine Sensor-Identifikation bzw. Sensor-Kennung ausgegeben wird zum Ermitteln, ob das Reifen-Sensor-Modul (6.i, 106.i, 107.i) unbekannt ist.

7. Verfahren nach einem der vorhergehenden Ansprüche, **dadurch gekennzeichnet, dass** das Reifen-Sensor-Modul (6.i, 106.i, 107.i) erfasst, ob sich das Reifen-Sensor-Modul (6.i, 106.i, 107.i) bewegt und der Bewegungszustand über das Datentelegramm (S1) ausgegeben wird.

8. Verfahren nach Anspruch 7, **dadurch gekennzeichnet, dass** ein über das Datentelegramm (S1) ausgegebener Reifenzustand (p, T, σ) lediglich dann mit dem Grenzwert (GW) verglichen wird bzw. der Sensorzustand lediglich dann überwacht wird, wenn der Bewegungszustand des eigenen Nutzfahrzeuges (1) dem Bewegungszustand des erfassten und unbekannten Reifen-Sensor-Moduls (6.i, 106.i, 107.i) entspricht.

9. Verfahren nach Anspruch 8, **dadurch gekennzeichnet, dass** ein über das Datentelegramm (S1) ausgegebener Reifenzustand (p, T, σ) lediglich dann mit dem Grenzwert (GW) verglichen wird bzw. der Sensorzustand lediglich dann überwacht wird, wenn sich sowohl das eigene Nutzfahrzeug (1) als auch die erfassten und unbekannten Reifen-Sensor-Module (6.i, 106.i, 107.i) in Bewegung befinden.

10. Verfahren nach einem der vorhergehenden Ansprüche, **dadurch gekennzeichnet, dass** zusätzlich festgestellt wird, ob das mindestens eine erfasste und unbekannte Reifen-Sensor-Modul (6.i, 106.i, 107.i) zu einem Anhängerfahrzeug (3) eines eigenen Nutzfahrzeuges (1) gehört,
wobei dazu von dem mindestens einen erfassten und unbekannten Reifen-Sensor-Modul (6.i, 106.i, 107.i) eine Anzahl von ausgegebenen Datentelegrammen (S1) in einem Zeitraum (dT) überwacht wird (St1.1, St1.2), und
das Auswerten der Datentelegramme (S1) in Schritt c) bereits stattfindet, bevor die Feststellung, ob das mindestens eine erfasste Reifen-Sensor-Modul (6.i, 106.i, 107.i) zu dem eigenen Anhängerfahrzeug (3) gehört, abgeschlossen ist.

11. Überwachungssystem (100) zur Überwachung von Reifenzuständen (p, T, σ) und/oder Sensorzuständen, mindestens aufweisend:
ein Steuergerät (4) und ein Empfangsmodul (5), wobei das Steuergerät (4) ausgebildet ist,
über das Empfangsmodul (5) zu erfassen, ob mindestens ein Reifen-Sensor-Modul (6.i, 106.i, 107.i) zum Messen von Reifenzuständen (p, T, σ) in einem Überwachungsbereich (11) des Empfangsmoduls (5) vorhanden ist,
zu ermitteln, ob das mindestens eine erfasste Reifen-Sensor-Modul (6.i, 106.i, 107.i) dem Steuergerät (4) unbekannt ist,
**dadurch gekennzeichnet, dass**
weiterhin das Datentelegramm (S1) des erfassten und unbekannten Reifen-Sensor-Moduls (6.i, 106.i, 107.i) auszuwerten ist,
wobei das Auswerten zumindest einen Vergleich mindestens eines durch das Modul-Signal (S1) übertragenen Reifenzustandes (p, T, σ) mit einem Grenzwert (GW) dafür und/oder ein Überwachen eines Sensorzustandes des Reifen-Sensor-Moduls (6.i, 106.i, 107.i) umfasst, und
das Steuergerät (4) ein Warnsignal (S2) ausgeben kann, wenn ein Reifenzustand (p, T, σ) den Grenzwert (GW) überschreitet bzw. unterschreitet, zum Anzeigen, dass ein Reifenzustand (p, T, σ) eines dem Reifen-Sensor-Modul (6.i, 106.i, 107.i) zugeordneten Reifens (7, 8, 9, 10, 108.i, 109.i) kritisch ist und/oder wenn ein kritischer Sensorzustand vorliegt,

12. Überwachungssystem (100) nach Anspruch 11, **dadurch gekennzeichnet, dass**
das Steuergerät (4) weiterhin ausgebildet ist, festzustellen, ob ein erfasstes und unbekanntes Reifen-Sensor-Modul (6.i, 106.i, 107.i) zu einem Anhängerfahrzeug (3) eines eigenen Nutzfahrzeuges (1) gehört,
wobei dazu eine Anzahl von von dem erfassten und unbekannten Reifen-Sensor-Modul (6.i, 106.i, 107.i) ausgegebenen Datentelegrammen (S1) in einem Zeitraum (dT) überwacht werden kann, und
wobei die Auswertung bereits stattfinden kann, bevor die Feststellung, ob das erfasste Reifen-Sensor-Modul (6.i, 106.i, 107.i) zu dem eigenen Anhängerfahrzeug (3) gehört, abgeschlossen ist.

## Claims

1. Method for monitoring tyre conditions (p, T, σ) and/or sensor conditions, comprising at least the following steps,
a) detecting whether there is at least one tyre-sensor module (6.i, 106.i, 107.i) for measuring tyre conditions (p, T, σ) and sensor conditions in a monitoring region (11);
b) determining whether the at least one detected tyre-sensor module (6.i, 106.i, 107.i) is unknown;
c) evaluating data messages (S1) of the at least one detected and unknown tyre-sensor module (6.i, 106.i, 107.i),
**characterized in that**
in a step c), an evaluation of data messages (S1) of the at least one detected and unknown tyre sensor module (6.i, 106.i, 107.i) takes place, the evaluation comprising at least one comparison of at least one tyre condition (p, T, σ) transmitted by the data message (S1) with a limit value (GW) therefor and/or a monitoring of a sensor condition of the tyre-sensor module (6.i, 106.i, 107.i) that is transmitted by the data message (S1) (St2.1, St2.2),
wherein, in a step d), an outputting of a warning signal (S2) takes place if a tyre condition (p, T, σ) goes above or below the respective limit value (GW), to indicate that a tyre condition (p, T, σ) of a tyre (7, 8, 9, 10, 108.i, 109.i) assigned to the at least one unknown tyre-sensor module (6.i, 106.i, 107.i) is critical and/or if a critical sensor condition is detected (St2.1, St2.2).

2. Method according to Claim 1, **characterized in that** a tyre temperature (T) and/or a tyre pressure (p) and/or a mechanical state of stress (σ) and/or a profile depth and/or a wheel load is measured or determined by the tyre-sensor module (6.i, 106.i, 107.i) as the tyre condition and is output by way of the data message (S1).

3. Method according to Claim 2, **characterized in that** the limit value (GW) for the tyre pressure (p) of less than or equal to 80% of a setpoint pressure (pset) corresponds to outputting a warning signal (S2) if the tyre pressure (p) of the corresponding tyre (7, 8, 9, 10, 108.i, 109.i) goes below the setpoint pressure value (pset) by more than 20%.

4. Method according to Claim 2 or 3, **characterized in that** the limit value for the tyre temperature (T) of greater than or equal to 120% of a setpoint temperature (Tset) corresponds to outputting a warning signal (S2) if the temperature of the corresponding tyre (7, 8, 9, 10, 108.i, 109.i) goes above the setpoint by more than 20%.

5. Method according to one of the preceding claims, **characterized in that** a sensor defect and/or a loose sensor is detected by the tyre-sensor module (6.i, 106.i, 107.i) as a critical sensor condition and is output by way of the data message (S1).

6. Method according to one of the preceding claims, **characterized in that** a sensor identification or sensor ID is output by the tyre-sensor module (6.i, 106.i, 107.i) by way of the data message (S1) for determining whether the tyre-sensor module (6.i, 106.i, 107.i) is unknown.

7. Method according to one of the preceding claims, **characterized in that** the tyre-sensor module (6.i, 106.i, 107.i) detects whether the tyre-sensor module (6.i, 106.i, 107.i) moves and the state of movement is output by way of the data message (S1).

8. Method according to Claim 7, **characterized in that** a tyre condition (p, T, σ) output by way of the data message (S1) is only compared with the limit value (GW) and the sensor condition is only monitored whenever the state of movement of the own commercial vehicle (1) corresponds to the state of movement of the detected and unknown tyre-sensor module (6.i, 106.i, 107.i).

9. Method according to Claim 8, **characterized in that** a tyre condition (p, T, σ) output by way of the data message (S1) is only compared with the limit value (GW) and the sensor condition is only monitored whenever both the own commercial vehicle (1) and the detected and unknown tyre-sensor module (6.i, 106.i, 107.i) are in motion.

10. Method according to one of the preceding claims, **characterized in that** it is additionally established whether the at least one detected and unknown tyre-sensor module (6.i, 106.i, 107.i) belongs to a trailer vehicle (1) of an own commercial vehicle (1),
wherein for this purpose a number of output data messages (S1) are monitored in a time period (dT) by the at least one detected and unknown tyre-sensor module (6.i, 106.i, 107.i) (St1.1, St1.2), and
the evaluation of the data messages (S1) in step c) already takes place before establishing whether the at least one detected tyre-sensor module (6.i, 106.i, 107.i) belongs to the own trailer vehicle (3) is completed.

11. Monitoring system (100) for monitoring tyre conditions (p, T, σ) and/or sensor conditions, at least having:
a control unit (4) and a receiving module (5), wherein the control unit (4) is designed
to detect by way of the receiving module (5) whether there is at least one tyre-sensor module (6.i, 106.i, 107.i) for measuring tyre conditions (p, T, σ) in a monitoring region (11) of the receiving module (5),
to determine whether the at least one detected tyre-sensor module (6.i, 106.i, 107.i) is unknown to the control unit (4),
**characterized in that**
the data message (S1) of the detected and unknown tyre-sensor module (6.i, 106.i, 107.i) still has to be evaluated,
the evaluation comprising at least one comparison of at least one tyre condition (p, T, σ) transmitted by the module signal (S1) with a limit value (GW) therefor and/or a monitoring of a sensor condition of the tyre-sensor module (6.i, 106.i, 107.i), and
the control unit (4) can output a warning signal (S2) if a tyre condition (p, T, σ) goes above or below the threshold value (GW), to indicate that a tyre condition (p, T, σ) of a tyre (7, 8, 9, 10, 108.i, 109.i) assigned to the tyre-sensor module (6.i, 106.i, 107.i) is critical and/or if there is a critical sensor condition.

12. Monitoring system (100) according to Claim 11, **characterized in that** the control unit (4) is also designed to establish whether a detected and unknown tyre-sensor module (6.i, 106.i, 107.i) belongs to a trailer vehicle (3) of an own commercial vehicle (1),
wherein for this purpose a number of data messages (S1) output by the detected and unknown tyre-sensor module (6.i, 106.i, 107.i) can be monitored in a time period (dT), and
wherein the evaluation may already take place before the establishing of whether the detected tyre-sensor module (6.i, 106.i, 107.i) belongs to the own trailer vehicle (3) is completed.

## Revendications

1. Procédé de surveillance d'états de pneumatiques (p, T, σ) et/ou d'états de capteurs, comprenant au moins les étapes suivantes:
a) détecter si au moins un module de capteur de pneumatique (6.i, 106.i, 107.i) pour la mesure d'états de pneumatiques (p, T, σ) et/ou d'états de capteurs est présent dans une zone de surveillance (11);
b) déterminer si ledit au moins un module de capteur de pneumatique détecté (6.i, 106.i, 107.i) est inconnu;
c) analyser des télégrammes de données (S1) dudit au moins un module de capteur de pneumatique détecté et inconnu (6.i, 106.i, 107.i),
**caractérisé en ce que**
dans une étape c), on effectue une analyse de télégrammes de données (S1) dudit au moins un module de capteur de pneumatique détecté et inconnu (6.i, 106.i, 107.i), dans lequel l'analyse comprend (St2.1, St2.2) au moins une comparaison d'au moins un état de pneumatique (p, T, σ) transmis par le télégramme de données (S1) avec une valeur limite (GW) pour celui-ci et/ou une surveillance d'un état de capteur du module de capteur de pneumatique (6.i, 106.i, 107.i) transmis par le télégramme de données (S1),
dans lequel, dans une étape d), on effectue une émission d'un signal d'avertissement (S2) lorsqu'un état de pneumatique (p, T, σ) franchit la valeur limite respective (GW) à la hausse ou à la baisse, afin d'afficher qu'un état de pneumatique (p, T, a) d'un pneumatique (7, 8, 9, 10, 108.i, 109.i) associé audit au moins un module de capteur de pneumatique inconnu (6.i, 106.i, 107.i) est critique et/ou lorsqu'un état de capteur critique est identifié (St2.1, St2.2).

2. Procédé selon la revendication 1, **caractérisé en ce que** l'on mesure ou on détermine comme état de pneumatique, au moyen du module de capteur de pneumatique (6.i, 106.i, 107.i), une température de pneumatique (T) et/ou une pression de pneumatique (p) et/ou un état de contrainte mécanique (σ) et/ou une profondeur des sculptures et/ou une charge radiale et on l'affiche au moyen du télégramme de données (S1).

3. Procédé selon la revendication 2, **caractérisé en ce que** la valeur limite (GW) pour la pression de pneumatique (p) est inférieure ou égale à 80 % d'une pression de consigne (psoll) correspondante pour l'affichage d'un signal d'avertissement (S2) lorsque la pression de pneumatique (p) du pneumatique correspondant (7, 8, 9, 10, 108.i, 109.i) descend de plus de 20 % en dessous de la valeur de la pression de consigne (psoll).

4. Procédé selon la revendication 2 ou 3, **caractérisé en ce que** la valeur limite pour la température de pneumatique (T) est supérieure ou égale à 120 % d'une température de consigne (Tsoll) correspondante pour l'affichage d'un signal d'avertissement (S2) lors d'un dépassement de plus de 20 % de la température du pneumatique correspondant (7, 8, 9, 10, 108.i, 109.i).

5. Procédé selon l'une quelconque des revendications précédentes, **caractérisé en ce qu'**un défaut de capteur et/ou un capteur détaché est identifié comme état de capteur critique par le module de capteur de pneumatique (6.i, 106.i, 107.i) et est affiché au moyen du télégramme de données (S1).

6. Procédé selon l'une quelconque des revendications précédentes, **caractérisé en ce qu'**une identification de capteur ou une reconnaissance de capteur est affichée par le module de capteur de pneumatique (6.i, 106.i, 107.i) au moyen du télégramme de données (S1), afin de déterminer si le module de capteur de pneumatique (6.i, 106.i, 107.i) est inconnu.

7. Procédé selon l'une quelconque des revendications précédentes, **caractérisé en ce que** le module de capteur de pneumatique (6.i, 106.i, 107.i) détecte si le module de capteur de pneumatique (6.i, 106.i, 107.i) se déplace et si l'état de mouvement est affiché au moyen du télégramme de données (S1).

8. Procédé selon la revendication 7, **caractérisé en ce qu'**un état de pneumatique (p, T, σ) affiché au moyen du télégramme de données (S1) n'est comparé à la valeur limite (GW) ou l'état de capteur n'est surveillé que lorsque l'état de mouvement du véhicule utilitaire proprement dit (1) correspond à l'état de mouvement du module de capteur de pneumatique détecté et inconnu (6.i, 106.i, 107.i).

9. Procédé selon la revendication 8, **caractérisé en ce qu'**un état de pneumatique (p, T, σ) affiché au moyen du télégramme de données (S1) n'est comparé à la valeur limite (GW) ou l'état de capteur n'est surveillé que lorsqu'aussi bien le véhicule utilitaire proprement dit (1) que les modules de capteur de pneumatique (6.i, 106.i, 107.i) se trouvent en mouvement.

10. Procédé selon l'une quelconque des revendications précédentes, **caractérisé en ce que** l'on constate en outre si ledit au moins un module de capteur de pneumatique détecté et inconnu (6.i, 106.i, 107.i) fait partie d'une remorque (3) d'un véhicule utilitaire proprement dit (1),
dans lequel on surveille à cet effet (St1.1, St1.2) au moyen dudit au moins un module de capteur de pneumatique détecté et inconnu (6.i, 106.i, 107.i) un nombre de télégrammes de données émis (S1) dans une période de temps (dT), et
on effectue déjà l'analyse des télégrammes de données (S1) à l'étape c) avant que la constatation du fait que ledit au moins un module de capteur de pneumatique (6.i, 106.i, 107.i) fait partie de la remorque proprement dite (3) soit terminée.

11. Système de surveillance (100) pour la surveillance d'états de pneumatiques (p, T, σ) et/ou d'états de capteurs, comprenant au moins:
un appareil de commande (4) et un module de réception (5), dans lequel l'appareil de commande (4) est configuré
pour détecter au moyen du module de réception (5) si au moins un module de capteur de pneumatique (6.i, 106.i, 107.i) pour la mesure d'états de pneumatiques (p, T, σ) est présent dans la zone de surveillance (11) du module de réception (5),
pour déterminer si ledit au moins un module de capteur de pneumatique (6.i, 106.i, 107.i) est inconnu de l'appareil de commande (4),
**caractérisé en ce que**
le télégramme de données (S1) du module de capteur de pneumatique détecté et inconnu (6.i, 106.i, 107.i) doit en outre être analysé,
dans lequel l'analyse comprend au moins une comparaison d'au moins un état de pneumatique (p, T, σ) transmis par le signal de module (S1) avec une valeur limite (GW) pour celui-ci et/ou une surveillance d'un état de capteur du module de capteur de pneumatique (6.i, 106.i, 107.i), et
l'appareil de commande (4) peut émettre un signal d'avertissement (S2), lorsqu'un état de pneumatique (p, T, σ) franchit la valeur limite (GW) à la hausse ou à la baisse, afin d'afficher qu'un état de pneumatique (p, T, σ) d'un pneumatique (7, 8, 9, 10, 108.i, 109.i) associé au module de capteur de pneumatique (6.i, 106.i, 107.i) est critique et/ou lorsqu'il existe un état de capteur critique.

12. Système de surveillance (100) selon la revendication 11, **caractérisé en ce que** l'appareil de commande (4) est en outre configuré pour constater si un module de capteur de pneumatique détecté et inconnu (6.i, 106.i, 107.i) fait partie d'une remorque (3) d'un véhicule utilitaire proprement dit (1),
dans lequel un nombre de tours peut à cet effet être surveillé par des télégrammes de données (S1) affichés par le module de capteur de pneumatique détecté et inconnu (6.i, 106.i, 107.i) dans une période de temps (dT), et
dans lequel l'analyse peut déjà être effectuée, avant que la constatation du fait que le module de capteur de pneumatique détecté (6.i, 106.i, 107.i) fait partie de la remorque proprement dite (3) soit terminée.
